# EUROPEAN PATENT APPLICATION

(11) **EP 1 143 387 A2**
(43) Date of publication of application: **10.10.2001**
(21) Application number: 01107789.8
(22) Date of filing: 04.04.2001
(51) Int. Cl.: G07F 7/10

(54) **Network settlement system and method**

(30) Priority: 04.04.2000 JP 2000101773
(71) Applicant: NEC CORPORATION, Tokyo (JP)
(72) Inventor: Suwamoto, Tuyosi, NEC Corporation, Minato-ku, Tokyo (JP); Oosawa, Kazuaki, NEC Corporation, Minato-ku, Tokyo (JP); Satoh, Hirokazu, NEC Corporation, Minato-ku, Tokyo (JP); Numasaki, Takeshi, NEC Corporation, Minato-ku, Tokyo (JP); Tanabe, Taisuke, NEC Corporation, Minato-ku, Tokyo (JP)
(74) Representative: VOSSIUS & PARTNER

(57) **Abstract**

A network settlement system allowing easy payment without the need of any credit card or any other kinds of cards in the case of purchasing commodities on a network is disclosed. At least one shop (116) is connected to the network (105) and a user is allowed to access a cyber shop (116) to purchase a commodity. A payer account used to pay a fee of using the network is previously registered. When a commodity has been purchased at the cyber shop by a user through the network, a shopping agent (112) charges the commodity purchased to the registered payer account (Fig. 2).

## Description

The present invention relates to network settlement techniques for network users, and in particular to a network settlement system and method for paying bills in the case of purchasing commodities on a specified network.

With the widespread use of the Internet, the users can easily visit shopping sites and make an electronic shopping. In the electronic shopping, actually users do not visit shops and make a purchase. Therefore, methods to transfer a purchase bill to a specified bank account or to pay by credit card are normally adopted.

However, in the case of transferring a purchase bill to a banking account, especially in the case of a purchase bill of small account, there is such a problem that its handling fee forms a higher proportion of total amount. Then, they inconveniently have to visit monetary facilities like a bank for payment, in spite of making a purchase on networks like the Internet and so on. Therefore, a credit card is usually used to pay. However, there is such another problem that only the possessor of credit card can pay a bill by this method. Since all kind of credit card is not always available in the electronic shopping site, there are cases where the own credit card cannot be used. Also, in the payment by credit card, its number and its valid date are required. Therefore, it is feared that these information is stolen on a transmission line for transporting data on the Internet. In the case where the information in the electronic shopping site is not kept under a strict security, there is a possibility that the card possessor or the card firm suffer a loss on account of an information leak on a transmission line, as well information tapping.

Furthermore, a kind of card like a prepaid card can be used for payment within its balance, partly in the electronic shopping site. However, the card bill is paid by transferring to a banking account or credit card. Therefore, the described-above problem is left as it is.

An object of the present invention is to provide a network settlement system and method allowing easy payment without the need of any credit card or any other kinds of cards in the case of purchasing commodities on a network.

Another object of the present invention is to provide a network settlement system and method allowing a communication company such as a common carrier and a broadcast company to participate in selling commodities to obtain a profit.

According to a network settlement system in a network, includes: at least one shop connected to the network, wherein a user is allowed to access the at least one cyber shop to purchase a commodity; a memory for registering a payer account used to pay a fee of using the network; and a server for charging a commodity purchased at a shop through the network to the payer account.

The server may pay for the commodity to the shop at a designated date.

According to an aspect of the present invention, a network settlement system includes: a communication terminal possessed by a registered user; a network provided by a communication company, wherein a registered user is allowed to access the network through the communication terminal; a billing server for charging a fee of using the network to a payer account of the registered user; at least one cyber shop for selling commodities through the network in response to an order from the registered user; and an agent for charging a commodity purchased at a cyber shop through the network to the payer account.

The agent may prompt the registered user to enter a password when the registered user purchases a commodity at the cyber shop, and, if the password is authenticated, then the agent proceeds a purchasing transaction.

The communication terminal may be shared among a plurality of users including the registered user, wherein the agent manages passwords for respective ones of the users to issue a list of bills for each user.

According to another aspect of the present invention, a network settlement system includes: a broadcast network; a communication terminal possessed by each user, which has a broadcast receiving capability permitted to receive broadcast programs from the broadcast network and further has a communication capability of connecting to a communication network; a billing server for charging one of a program receiving fee of the broadcast network and a fee of using the communication network to a payer account of each user; at least one shop for selling commodities using the broadcast network; and an agent for charging a commodity purchased at a shop by a user using the broadcast network and the communication network to the payer account.

As described above, when a user purchases a commodity from a shop connected to the network, the network charge and the purchase bill are collectively settled at a previously registered user' s account. Since the payment system is unified, the user does not need any payment for other payees. Also, since the user does not need any credit card or other kinds of cards, they can easily take the necessary procedure for payment and the security can be ensured because the leak of personal information is effectively prevented.

Further, since a commodity purchased is charged to the user's account used to pay a fee of using the network, a communication company such as a common carrier and a broadcast company can be easily participate in selling commodities to obtain a profit.
Fig. 1 is a schematic diagram showing the configuration of a network settlement system according to a first embodiment of the present invention;
Fig. 2 is a block diagram showing the network settlement system to explain how to settle communication charges and bills for use of a personal digital assistant in the first embodiment;
Fig. 3 is a flow chart showing a processing flow of a shopping agent in the first embodiment;

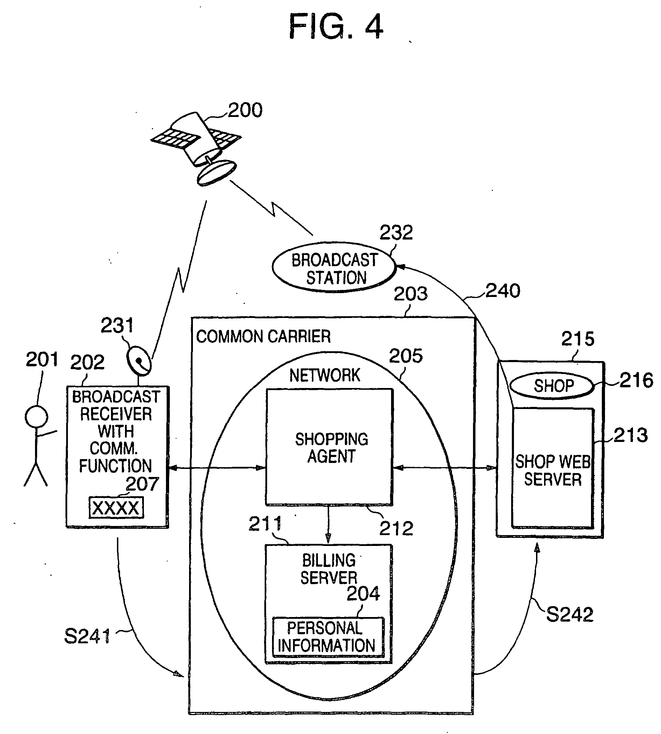

Fig. 4 is a block diagram showing the network settlement system to explain how to settle communication charges and bills for use of a broadcasting receiver with communication function according to a second embodiment of the present invention;
Fig. 5 is a flow chart showing a processing state of the shopping agent in the second embodiment; and

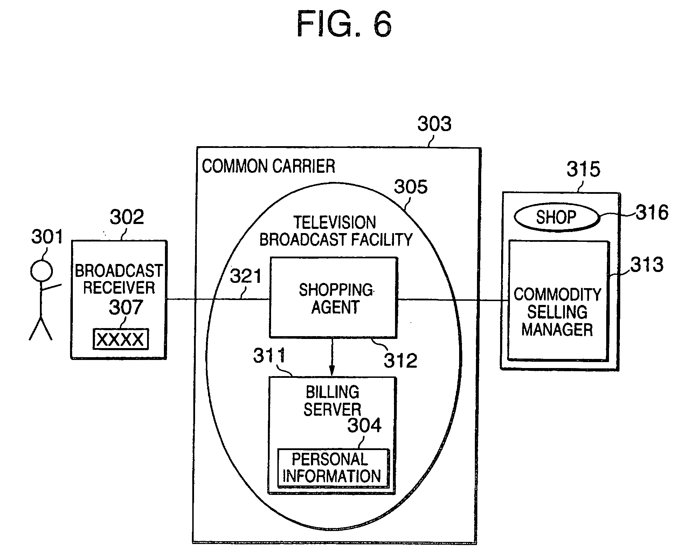

Fig. 6 is a block diagram showing the network settlement system to explain how to settle communication charges and bills for use of a CATV receiver terminal according to a third embodiment of the present invention.

### FIRST EMBODIMENT

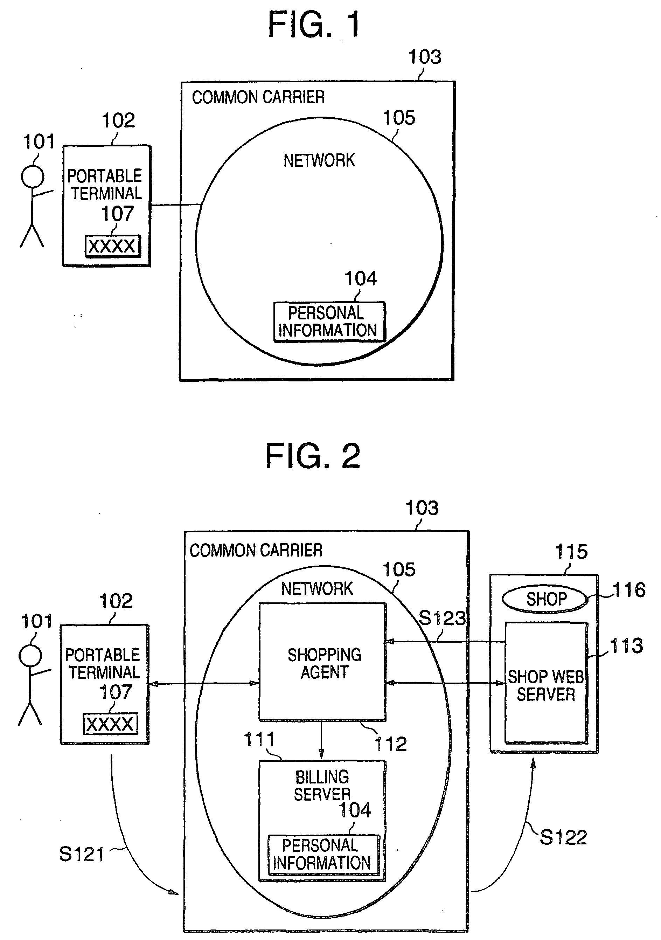

Referring to Fig. 1, a system user 101 possesses a portable communication terminal 102 which is portable and is wirelessly communicable, such as a personal digital assistant, a portable telephone, a PHS (Personal Handy-phone System) terminal, and the like. When the system user 101 uses the portable communication terminal 102 for public services, the contract is signed with a specified communication company or common carrier 103. In the case of signing the contract, the system user 101 is requested to inform the communication company 103 of the personal information 104 including its name, its address, the bank name, and its account number. This personal information 104 is used to pay a charge for using the network 105 of the communication company 103.

When the portable communication terminal 102 is purchased by the user 101, an individual ID 107 is already assigned to and incorporated in the portable communication terminal 102 at the communication company 103. The individual ID 107 is assigned uniquely to each user's terminal 102. The communication company 105 uses the individual ID to keep track of user's use of the network 105 and therefore the communication charge can be collected from the account number described on the personal information 104.

Fig. 2 shows the case of the settlement of charges when the user 101 visits shopping sites on the network 105 provided by the communication company 103 employing or shopping sites on another network connected with the network 105 (for example, the Internet.)

The communication company 103 possesses a billing server 111, which stores the personal information 104 for each user 101 therein. The billing server 111 is also used to pay the bills of commodities purchased on the network 105, as well as it is used to pay the charges of network 105 for the user 101 as described in Fig. 2. This point is different from the conventional one. In the present embodiment, a broker called a shopping agent 112 is provided. The shopping agent 112 is composed of a computer and software, and it mediates between a shop web server 113 and the portable communication terminal 102. The shop web server 113 manages the commodities in a plurality of cyber shops 116 forming a mall 115 (only one cyber shop is shown in Fig. 2).

The procedure of purchasing commodities from the mall 115 by the system user 101 will be described hereafter. First, the system user 101 uses the portable communication terminal 102 to connect to the network 105 of communication company 103 (step S121). Next, a menu displayed on the liquid crystal display (not shown) of portable communication terminal 102 is used to input the predetermined URL (Uniform Resource Locator) or to access a desired mall 115 by tracing paths displayed on the menu.

In the mall 115, the operation of portable communication terminal 102 allows the selection of commodities. Since this is carried out basically in the same manner as when some commodities are purchased from the mall on the Internet by a personal computer, the details thereof will be omitted.

Here, it is assumed that one commodity in a shop 116 is decided to be purchased. In this case, when the user 101 operates to advance to the settlement page of commodities, the shop web server 113 is connected to the portable communication terminal 102 through the shopping agent 112. That is, the shop web server 113 can identify the communication company 103 based on the access information of portable communication terminal 102 and thereby access the shopping agent 112 of the communication company 103 (step S123).

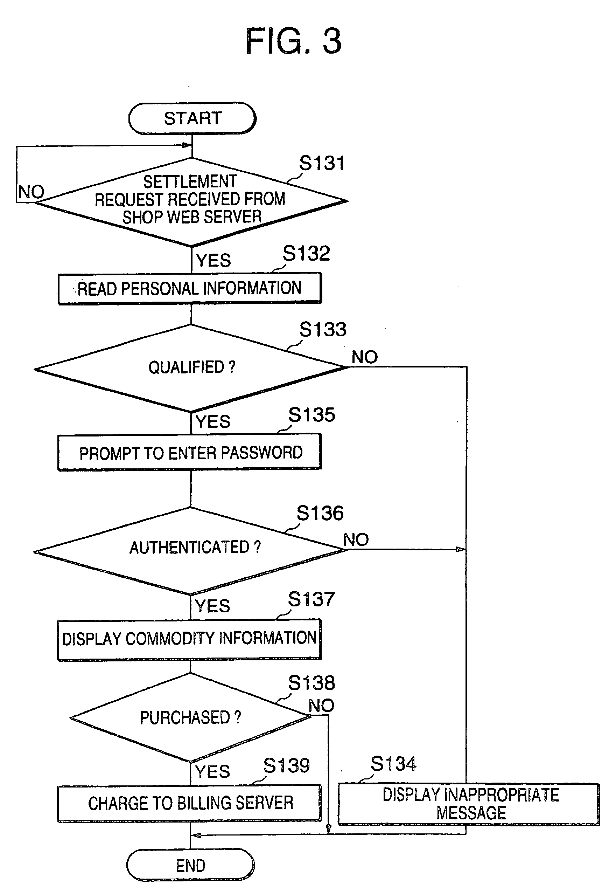

As shown in Fig. 3, when the shopping agent 112 receives an inquiry for a settlement of commodities from the shop web server 113 (YES at step S131), the personal information 104 registered in the billing server 111 is read out (step S132). And, it is checked whether the system user 101 is qualified to purchase commodities through the shopping agent 112 (step S133). For example, when a system user 101 under age tries to purchase alcohol, it is determined that the system user 101 is not qualified. When it is determined that the system user 101 is inappropriate (NO at step S133), the inappropriate message is returned to the portable communication terminal 102 (step S134), and the process is completed (End). It is the same with the case where additional appropriateness check is needed to purchase high-priced commodities such as cars and real estate.

On the other hand, when it is determined that the system user 101 is qualified (YES at step S133), the system user 101 is prompted to enter a predefined password (step S135). On condition that the portable communication terminal 102 is personally owned, the password input is not always required. However, when the portable communication terminal 102 is shared by a plurality of persons as the case where the owner is a company, or when other persons may use it without any notice, the password is required in the present embodiment from the viewpoint of security.

After the password is authenticated (YES at step S136), the information such as the amount of payment to be paid from the bank account and the payment date, which relates to the payment of charges of desired commodities to purchase, is transmitted to the portable communication terminal 102 to be displayed (step S137).

When the system user 101 agrees to the purchase condition through the portable communication terminal 102 (YES at step S138), the shopping agent 112 bills the billing server 111 (step S139). If the user 101 does not agree to the settlement condition at this last stage (NO at step S138), then the shopping agent 112 finishes the process without billing (End).

After the shopping agent 112 bills the billing server 111, the bill of commodities purchased through the shopping agent 112 is paid from the bank account of the user 101, together with the communication fee, or which will be paid another day. In this case, when the invoice and the statement of the purchased commodity, which show definitely its name, purchasing date and price, are issued in advance as well as the statement of communication charge, the total amount billed is paid from the same bank account as one for the communication charge, on the designated date. After the shopping agent 112 takes the prescribed fee from the collected amount for purchasing commodities, the shopping agent 112 performs the payment for each shop 116.

Although the payment date is usually after the bill collection date, even when the collection is delayed or becomes impossible on account of some reason, the shopping agent 112 will pay the bill as in the case of a credit card. Therefore, although for each shop 116 the fee is paid from the selling price, the shop 116 can receive the cash for a commodity with reliability. Also, unlike in use of credit card, the user 101 has no fear that its personal information is stolen. Also, the user 101 can easily take the necessary procedure for payment.

### SECOND EMBODIMENT

According to a second embodiment of the present invention, a user 201 possesses a broadcast receiving terminal 202 with communication capability. This broadcast receiving terminal 202 can receive the channels from a communication satellite 200 such as CS (Communication Satellite), BS (Broadcasting Satellite) or the like, and furthermore can use another communication network 205. In the present embodiment, the broadcast receiving terminal 202 is connected with a parabolic antenna 231 to receive satellite-broadcasting signals from a broadcast station 232 via the communication satellite 200 such as CS or BS, and it is also connected with the communication network 205 of a communication company 203 wirelessly or with cables. Similar to the first embodiment, in the broadcast receiving terminal 202, an individual ID 207 is stored in a nonvolatile memory and the like (not illustrated).

The communication company 203 provides a billing server 211 and a shopping agent 212 in the communication network 205 under its jurisdiction. When the user 201 signs the contract with the communication company 103, the communication company 203 is informed of the user's personal information 204 including its name, address, bank name, and its account number. This personal information 204 is used for the payment of charge for using communication network 205 of the communication company 203, which is the same as the first embodiment.

The broadcast station 232 has a channel for shopping. The charge for using this shopping channel is usually free. In the case of selling commodities on pay television, the channel of pay television is scrambled. When this channel is used, a descrambler installed in broadcast receiving terminal 202 uses the individual ID 207 to descramble the scrambled signals.

Regardless of free television or pay television, the broadcast station 232 makes a contract with the shopping mall 215, which is composed of predetermined shops or a predetermined shop group, to broadcast individual commodities of the shop 216 and try to sell them. Although the communication satellite 200 such as CS or BS can transmit radio waves for broadcast, it cannot receive radio waves directly from the broadcast receiving terminal 202. In the first embodiment, the mall 115 and the portable communication terminal 102 on Internet are bidirectionally communicated, while in the second embodiment, the communication between the broadcast receiving terminal 202 and the shopping mall 215 is performed through the communication network 205. Therefore, the transmission capacity from the shopping mall 215 to the broadcast receiving terminal 202, compared with the Internet, is greatly improved, a detailed list of commodities can be transferred in real time by the television broadcasting.

In the present embodiment, since the shopping mall 215 is connected with the communication company 203 via the Internet, a shop web server 213 is arranged in the shopping mall 215. The shop web server 213 can transmit broadcasting data 240 to the broadcast station 232 via a network such as the Internet and the like. Alternatively, the broadcast station 232 can individually produce broadcasting programs to broadcast them towards the broadcast receiving terminals 202 via the communication satellite 200.

The procedure of television shopping for the system user 201 will be described. The user 201 operates the broadcast receiving terminal 202 to connect it to the network 205 of the communication company 203 (step S241). When a menu is displayed on the television monitor (not illustrated) connected with the broadcast receiving terminal 202, the user 201 inputs the predetermined URL or trace the path displayed on the menu to access a desired shopping mall 115. For example, the shopping mall 215 may be a permanent organization dedicated for a shopping channel. In the web site, the shopping program guide to be broadcasted by the broadcast station 232 is displayed to show around when, on which channel, about which commodities, as well as the display of data such as the contract to purchase commodities and the like.

The user 201 looks at the shopping program guide to tune the broadcast receiving terminal 202 from the current channel to the desired channel at the predefined time, so that the user 201 can watch the program showing desired commodities. After watching the program, if some commodities are desired to purchase, as necessary, the detailed information of commodities of interest can be derived from the shop web server 213. In this manner, when the commodities are decided to be purchased, the user 201 accesses a commodity purchasing page on the web site and designates the desired commodities. If the commodities are on the air of the program, then all of operation is to press such a selection key (not shown) as "designate commodities on the air." Thereafter, the process of shopping agent 212 is started.

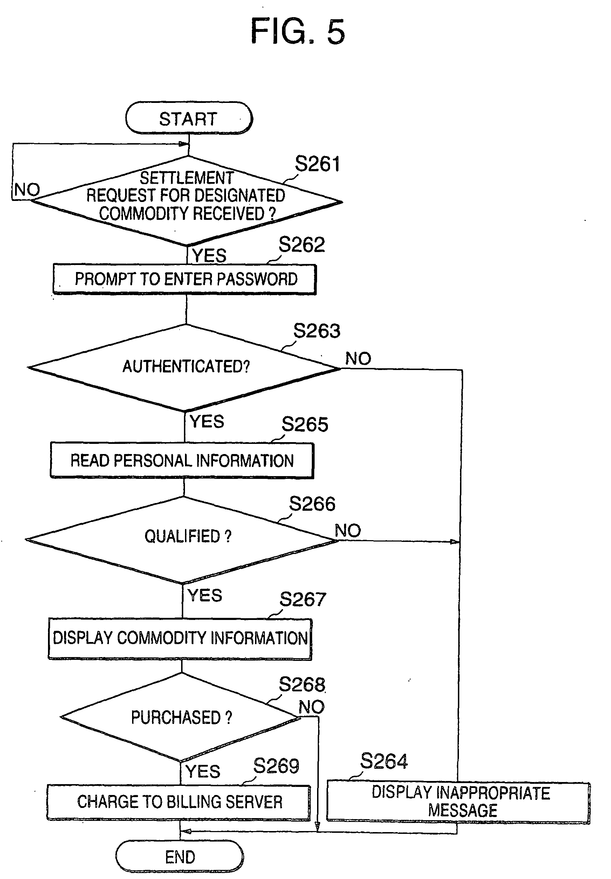

As shown in Fig. 5, when the user 201 applies for the settlement for purchased commodities by designating the number of the commodities (YES at step S261), the user 201 is prompted to enter the predefined password by the shopping agent 212 (step S262). In the case where the broadcast receiving terminal 202 is shared by a family, the password for each family member may be determined at the time of signing the contract. After the input of password, the identification is checked (step S263). In the case of family use, the input password is required to match one of family member's passwords. When the input password does not match, the shopping agent 212 returns the inappropriate message to the broadcast receiving terminal 202 (step S264) and the process is completed (End).

On the other hand, when the password matches (YES at step S263), the personal information 204 is read out from the billing server 211 (step S265) and it is determined whether the user 201 is qualified to purchase the commodities, based on the relationship between the read-out personal information and the password (step S266). When the user 201 is inappropriate (NO at step S266), the inappropriate message is sent to the broadcast receiving terminal 202 (step S264) and the process is completed (End). While, when it is determined that the user 201 is qualified to purchase the commodities (YES at step S266), the commodity information to be settled is displayed (step S267). When the user 201 confirms the purchase on the display (YES at step S268), the shopping agent 212 bills the billing server 211 (step S269). If the user is not agreed to the settlement at the last stage (NO at step S268), the shopping agent 212 finishes processing without billing (End).

After the shopping agent 212 bills the billing server 211, the bill of commodities purchased through the shopping agent 212 is paid from the bank account of the user 201, together with the communication fee, or which will be paid another day. In this case, when the invoice and the statement of the purchased commodity, which show definitely its name, purchasing date and price, are issued in advance as well as the statement of communication charge, the total amount billed is paid from the same bank account as one for the communication charge, on the designated date. In the case where a family member purchases commodities, its name and its price are displayed for the name corresponding to the input password. After the shopping agent 212 takes the prescribed fee from the collected amount for purchasing commodities, the shopping agent 212 performs the payment for each shop 216.

Although the payment date is usually after the bill collection date, even when the collection is delayed or becomes impossible on account of some reason, the shopping agent 212 will pay the bill as in the case of a credit card. Therefore, although for each shop 216 the fee is paid from the selling price, the shop 216 can receive the cash for a commodity with reliability. Also, unlike in use of credit card, the user 201 has no fear that its personal information is stolen. Also, the user 201 can easily take the necessary procedure for payment.

Since the purchase bill of commodities is explicitly shown for each member of the family, if the password is determined for each family member at the time of signing contract of broadcast receiving terminal 202, then the family members except for the contractor can enjoy shopping.

Here, in the above-described second embodiment, the broadcast station 232 uses the communication satellite 200 to transmit broadcasting signals for shopping to the broadcast receiving terminal 202. As a matter of course, a surface wave is also used to transmit them to the broadcast receiving terminal 202 without using the communication satellite 200. The present embodiment is also applicable to this case.

### THIRD EMBODIMENT

According to a third embodiment of the present invention, a broadcast receiving terminal 302 possessed by a user 301 is connected to a CATV (cable television) station 303 through a communication cable 321 such as a coaxial cable. Since a television broadcasting facility 305 is arranged to perform the television broadcast in the CATV station 303, the broadcasting signals on a plurality of channels are transmitted to the broadcast receiving terminal 302 through the communication cable 321. An individual ID is uniquely assigned to the broadcast receiving terminal 302. As for scrambled pay programs, only the users under the pay-program reception contract can watch descrambled programs.

The CATV station 303 also provides many dedicated channels for shopping. Also, some channels provide shopping corners in the time zone for commercial messages. In the present embodiment, when the broadcast receiving terminal 302 is set to select the dedicated channel for shopping by the user 301, or when the shopping corner is televised on the current channel, the broadcast receiving terminal 302 is connected to a predetermined shopping mall 315 through the shopping agent 312. In the shopping mall 315, a commodity selling manager or a management organization 313 manage some shops 316. The commodities sold in these shops 316 are broadcasted by the television broadcasting facility 315.

When a commodity is introduced and the user decides to purchase it, the shopping agent 312 starts processing the settlement. Since this way is essentially same as that explained in the first embodiment, the detailed explanation will be omitted. The shopping agent 312 reads out personal information 304 and determines the appropriateness. If the user is qualified to purchase the commodity, then the settlement is made, and then the charge to be billed for the user 301 by the shop 316 is billed to the billing server 311 via the commodity selling manager or the management organization 313. In this case, the CATV station 303 bills the user 301 for the total amount billed of the charge for using of broadcast receiving terminal 302 and of the shopping charge.

### ADVANTAGES

As described above, a payer account used to pay a fee of using the network is previously registered and a commodity purchased at a shop through the network is automatically charged to the payer account of the user. Accordingly, since the payment method is unified, the users do not need any payment procedure. As a credit card or other cards are not required, there is such an advantage that the procedure can be easily taken and that the security can be ensured because the leak of personal information is prevented.

When a bi-directional communication system such as CATV or the like is employed, a large amount of commodity information can be transferred and the procedure from commodity selection to settlement is carried out by a single communication network.

## Claims

1. A network settlement system in a network, comprising:
at least one shop (116) connected to the network (105), wherein a user is allowed to access the at least one cyber shop to purchase a commodity;
a memory (104) for registering a payer account used to pay a fee of using the network;
**characterized by**
a server (111, 112) for charging a commodity purchased at a shop through the network to the payer account.

2. The network settlement system according to claim 1, wherein the server pays for the commodity to the shop at a designated date.

3. A network settlement system comprising:
a communication terminal (102) possessed by a registered user;
a network (105) provided by a communication company, wherein a registered user is allowed to access the network through the communication terminal;
at least one cyber shop (116) for selling commodities through the network in response to an order from the registered user;
**characterized by**:
a billing server (111) for charging a fee of using the network to a payer account of the registered user; and
an agent (112) for charging a commodity purchased at a cyber shop through the network to the payer account.

4. The network settlement system according to claim 3, wherein the agent prompts the registered user to enter a password when the registered user purchases a commodity at the cyber shop, and, if the password is authenticated, then the agent proceeds a purchasing transaction.

5. The network settlement system according to claim 3 or 4, wherein the agent pays for the commodity to the cyber shop at a designated date.

6. The network settlement system according to any of claims 3 to 5, wherein the communication terminal is shared among a plurality of users including the registered user, wherein the agent manages passwords for respective ones of the users to issue a list of bills for each user.

7. A network settlement system comprising:
a broadcast network (232);
a communication terminal (202) possessed by each user, which has a broadcast receiving capability permitted to receive broadcast programs from the broadcast network and further has a communication capability of connecting to a communication network;
a billing server (211) for charging one of a program receiving fee of the broadcast network and a fee of using the communication network to a payer account of each user;
at least one shop (216) for selling commodities using the broadcast network; and
an agent (212) for charging a commodity purchased at a shop by a user using the broadcast network and the communication network to the payer account.

8. The network settlement system according to claim 7, wherein the payer account of each user is used to charge a program receiving fee of the broadcast network.

9. The network settlement system according to claim 7, wherein the payer account of each user is used to charge the fee of using the communication network.

10. The network settlement system according to any of claims 7 to 9, wherein the agent prompts the user to enter a password when the user purchases a commodity at the shop, and, if the password is authenticated, then the agent proceeds a purchasing transaction.

11. The network settlement system according to any of claims 7 to 10, wherein the agent pays for the commodity to the shop at a designated date.

12. The network settlement system according to any of claims 7 to 11, wherein the communication terminal is shared among a plurality of users including a registered user, wherein the agent manages passwords for respective ones of the users to issue a list of bills for each user.

13. A network settlement system comprising:
a bi-directional broadcast network (305);
a communication terminal (302) possessed by each user, which has a broadcast receiving capability permitted to receive broadcast programs from the broadcast network and further has a communication capability;
a billing server (311) for charging one of a program receiving fee of the broadcast network and a fee of using the communication network to a payer account of each user;
at least one shop (316) for selling commodities using the broadcast network; and
an agent (312) for charging a commodity purchased at a shop by a user using the broadcast network and the communication network to the payer account.

14. A network settlement method in a network connected to at least one shop, wherein a user is allowed to access the at least one cyber shop to purchase a commodity, comprising the steps of:
registering a payer account used to pay a fee of using the network; and
charging a commodity purchased at a shop through the network to the payer account.

15. The network settlement method according to claim 14, wherein the network is a broadcast network.

16. A network settlement method in network provided by a communication company, wherein a registered user is allowed to access the network through a communication terminal of its own to purchase a commodity at a shop, comprising the steps of:
charging a fee of using the network to a payer account of the registered user;
purchasing a commodity at a shop for selling commodities through the network in response to an order from the registered user; and
charging the commodity purchased at the shop through the network to the payer account.

17. The network settlement method according to claim 16, wherein the network is a broadcast network.

18. The network settlement method according to claim 16, wherein the network is a CATV (cable television) network.
